# EUROPÄISCHE PATENTSCHRIFT

(11) **EP 2 490 890 B1**
(45) Veröffentlichungstag und Bekanntmachung des Hinweises auf die Patenterteilung: **09.08.2017**
(21) Anmeldenummer: 10776301.3
(22) Anmeldetag: 22.10.2010
(51) Int. Cl.: B32B 27/08, B32B 27/20, B65B 25/00, B32B 7/12, B32B 15/08, B32B 15/20, B32B 27/30, B32B 27/32, B32B 27/34, B32B 27/36, B32B 27/40, B32B 3/26, B32B 27/10

(54) **VERFAHREN ZUM HERSTELLEN AUTOKLAVIERTER NAHRUNGSMITTEL IN EINEM AUS EINEM FLÄCHENFÖRMIGEN VERBUND GEBILDETEN BEHÄLTER MIT EINER FARBIGEN VERNETZTEN ÄUSSEREN POLYMERSCHICHT ERHÄLTLICH DURCH TIEFDRUCK**
METHOD FOR THE PRODUCTION OF AUTOCLAVED FOOD IN A RECEPTACLE FORMED FROM A LAMINATE COMPRISING A COLORED CROSS-LINKED OUTER POLYMER LAYER OBTAINED IN A GRAVURE PRINTING PROCESS
PROCÉDÉ POUR PRÉPARER DES ALIMENTS AUTOCLAVES DANS UN RÉCIPIENT FORMÉ À PARTIR D'UN COMPOSITE PLAT ET PRÉSENTANT UNE COUCHE POLYMÈRE EXTÉRIEURE RÉTICULÉE COLORÉE POUVANT ÊTRE OBTENUE PAR IMPRESSION EN CREUX

(30) Priorität: 22.10.2009 DE 102009050418
(43) Veröffentlichungstag der Anmeldung: 29.08.2012
(73) Patentinhaber: SIG Technology AG, 8212 Neuhausen (CH)
(72) Erfinder: WOLTERS, Michael, 52525 Heinsberg (DE); SCHIBULL, Dirk, 52525 Heinsberg (DE)
(74) Vertreter: Herzog, Fiesser & Partner Patentanwälte PartG mbB
(86) Internationale Anmeldenummer: PCT/EP2010/006460
(87) Internationale Veröffentlichungsnummer: WO 2011/113453

(56) Entgegenhaltungen:
- WO-A1-98/46689
- WO-A1-2009/023520
- DATABASE WPI Week 199348 Thomson Scientific, London, GB; AN 1993-383263 XP002621171, -& JP 5 287229 A (TOYO INK MFG CO) 2. November 1993 (1993-11-02)
- DATABASE WPI Week 199628 Thomson Scientific, London, GB; AN 1996-272887 XP002621172, -& JP 8 113749 A (SAKATA INX KK) 7. Mai 1996 (1996-05-07)
- DATABASE WPI Week 199706 Thomson Scientific, London, GB; AN 1997-061841 XP002621173, -& JP 8 311144 A (DAINIPPON INK & CHEM INC) 26. November 1996 (1996-11-26)

## Beschreibung

Im Allgemeinen betrifft die Erfindung ein Verfahren zur Herstellung eines geschlossenen, gefüllten Behälters mit mindestens einem mindestens eine Kante aufweisenden flächenförmigen Verbund, beinhaltend die Schritte: Bereitstellen eines flächenförmigen Verbunds, beinhaltend a1. mindestens eine äußere vernetzte, Farbmittel beinhaltende Kunststofffarbschicht, a2. eine Trägerschicht, und a3. eine thermoplastische Kunststoffschicht; Formen des flächenförmigen Verbunds unter Erhalt eines offenen Behälters, Befüllen des Behälters mit einem Nahrungsmittel, Schließen des Behälters unter Erhalt des geschlossenen, gefüllten Behälters sowie dessen Konservierung.

Seit langer Zeit erfolgt die Konservierung von Nahrungsmitteln, seien es Nahrungsmittel für den menschlichen Verzehr oder auch Tiernahrungsprodukte, dadurch, in dem diese entweder in einer Dose oder in einem mit einem Deckel verschlossenen Glas gelagert werden. Hierbei kann die Haltbarkeit zum einen dadurch erreicht werden, in dem jeweils das Nahrungsmittel und der Behälter, hier Glas bzw. Dose, getrennt möglichst weitestgehend entkeimt werden und dann das Nahrungsmittel in den Behälter gefüllt und dieser verschlossen wird. In einer anderen Vorgehensweise wird das Nahrungsmittel in das Glas bzw. in die Dose gefüllt und dann durch Temperaturbehandlung möglichst weitestgehend entkeimt und das Glas oder die Dose dann verschlossen. In einer weiteren Vorgehensweise wird das Nahrungsmittel in das Glas oder die Dose gefüllt und diese verschlossen. Anschließend werden die verschlossene Dose oder das geschlossene Glas mit dem darin befindlichen Nahrungsmittel einer Hitzebehandlung, die als Pasteurisieren, Sterilisieren oder Autoklavieren bezeichnet wird, vorzugsweise eine meist mit überhitztem Wasserdampf erfolgenden Autoklavierung, ausgesetzt, um das Nahrungsmittel und auch die dem Nahrungsmittel zugewandten Behälterinnenwände wie den Verschluss der Dose bzw. den Deckel des Glases auf seiner dem Nahrungsmittel zugewandten Seite soweit wie möglich zu entkeimen. Diese an sich über eine lange Zeit bewährten Maßnahmen zur Erhöhung der Haltbarkeit von Nahrungsmittel haben jedoch eine Reihe von Nachteilen. Dosen und Gläser haben aufgrund ihrer im Wesentlichen zylindrischen Form den Nachteil, dass eine sehr dichte und platzsparende Packung nicht möglich ist. Zudem haben Dosen und Gläser ein erhebliches Eigengewicht, das zu einem erhöhten Energieaufwand beim Transport führt. Außerdem ist zur Herstellung von Glas, Weißblech oder Aluminium, selbst wenn die hierzu verwendeten Rohstoffe aus dem Recycling stammen, ein recht hoher Energieaufwand notwendig. Bei Gläsern kommt erschwerend ein erhöhter Transportaufwand hinzu. Die Gläser werden meist in einer Glashütte vorgefertigt und müssen dann unter Nutzen erheblicher Transportvolumina zu dem das Nahrungsmittel abfüllenden Betrieb transportiert werden. Darüber hinaus lassen sich Gläser und Dosen nur mit einem erheblichen Kraftaufwand oder unter Zuhilfenahme von Werkzeugen und damit eher umständlich öffnen. Bei Dosen kommt eine hohe Verletzungsgefahr durch scharfe beim Öffnen entstehende Kanten hinzu. Bei Gläsern kommt es immer wieder dazu, dass beim Füllen oder Öffnen der gefüllten Gläser Glassplitter in das Nahrungsmittel gelangen, die schlimmstenfalls zu inneren Verletzungen beim Verzehr des Nahrungsmittels führen können.

Aus dem Stand der Technik ist ein anderes Konzept zur Lagerung lang haltbarer Nahrungsmittel bekannt. Hierbei werden Behälter verwendet, die aus einem mehrschichtig aufgebauten flächenförmigen Verbund, oft auch als Laminat bezeichnet, ausgebildet sind, in dem insbesondere steifes Papier, Karton oder Pappe eine für die Fornistabilität dieser Verpackungen maßgebliche Trägerschicht bildet. Derartige Verpackungen offenbart beispielsweise WO 97/02140, die ein Herstellungsverfahren für einen gefalteten, hitze- und feuchtigkeitsresistenten Behälter offenbart, der durch das sogenannte "Hot fill"-Verfahren (vgl. Ullmann's Enzyklopaedia of Industrial Chemistry, Vol. A 11, "FOODS", 2. "Food Technology, 1988, Seiten 549 und 552, VCH Verlagsgesellschaft Weinheim) behandelt wird. Einen weiteren Behälter aus einem flächigen Verbund mit Karton als Trägerschicht offenbart WO 97/02181. Ein anderes ebenfalls zu dieser Gruppe von Behältern aus einem flächigen Verbund mit Karton als Trägerschicht gehörendes Behälterkonzept offenbart DE-OS-24 12 447. Auch WO 03/059622 A2 offenbart ein Behälterkonzept aus einem flächenförmigen Verbund mit Karton als Trägerschicht, der zum Autoklavieren eingesetzt wird.

Oftmals sind diese Behälter mit Druckbildern oder Farbdekoren versehen, die neben Informationen über den Inhalt der Behälter auch wichtige ästhetische Eindrücke bei dem Endverbraucher der in den Behältern befindlichen Nahrungsmittel hervorrufen sollen. Es ist besonders nachteilig, wenn diese Druckbilder durch die meist drastischen Bedingungen während der Konservierung durch Autokalvieren leiden. Um dieses zumindest teilweise zu verhindern schlägt WO 02/22462 A1 die Verwendung eines über die Farbschicht aufgebrachten Schutzlacks vor. Ähnliche Konzepte einer Schutzschicht über der Farbe schlagen auch DE 102 52 553 B4, WO 98/51493 A1 sowie WO 2008/094085 A1 vor.

Allgemein liegt die erfindungsgemäße Aufgabe der vorliegenden Erfindung darin, die sich aus dem Stand der Technik ergebenden Nachteile zumindest teilweise zu beseitigen.

Zudem lag die Aufgabe vorliegend darin, ein Verfahren zu schaffen, mit dem sich mit geringerem Aufwand ein geschlossener, gefüllter und autoklavierter Behälter bereitstellen lässt, mit möglichst geringer Beeinträchtigung der Druckbilder oder Farbdekore. Neben Verkratzen und Ablösen der Druckbilder oder Farbdekore soll ein Auswaschen der Farben währende des Autoklavierens möglichst vermieden werden, um so eine hohe Autoklavierresistenz zu gewährleisten. Hierbei soll die Verfahrensgeschwindigkeit möglichst hoch bleiben und eine Herstellung in möglichst wenigen, bevorzugt nur einer Druckanlagen, vorzugsweise in einem kontinuierlichen Betrieb, erlauben sowie eine gute Eignung des Behälters zur Aufnahme von Nahrungsmitteln sicherstellen.

Einen Beitrag zur Lösung mindestens einer der vorstehenden Aufgaben leisten die Gegenstände der kategoriebildenden Ansprüche und nachfolgenden Ausgestaltungen. Die Gegenstände der von den kategoriebildenden Ansprüchen abhängigen Unteransprüche stellen bevorzugte Ausgestaltungen dieses Lösungsbeitrags dar.

Einen Beitrag zur Lösung mindestens einer der vorstehenden Aufgaben leistet ein Verfahren zur Herstellung eines einen Innenraum gegenüber einer Umgebung abschließenden, geschlossenen, mit Nahrungsmittel gefüllten Behälters aus mindestens einem mindestens eine Kante aufweisenden flächenförmigen Verbund, beinhaltend die Schritte:
a) Bereitstellen des flächenförmigen Verbunds, beinhaltend
   a1. mindestens eine äußere, vorzugsweise äußerste, vernetzte, Farbmittel beinhaltende Kunststofffarbschicht, wobei die Kunststofffarbschicht (9) ein Polyadditionsprodukt beinhaltet;
   a2. eine Trägerschicht; und
   a3. eine thermoplastische Kunststoffschicht;
b) Formen des flächenförmigen Verbunds unter Erhalt eines offenen Behälters, wobei die Kunststofffarbschicht zur Umgebung und die Kunststoffschicht zum Innenraum weisen;
c) Befüllen des offenen Behälters mit einem Nahrungsmittel;
d) Schließen des offenen Behälters unter Erhalt des geschlossenen, gefüllten Behälters;
e) Konservieren des Nahrungsmittel in dem geschlossenen, gefüllten Behälter in einer Druckkammer unter einem Kammerdruck von mehr als 1 bar bei einer Temperatur in einem Bereich von mehr als 100 bis 140°C in Gegenwart von Wasserdampf.

Als Polyaddionsprodukte kommen allem dem Fachmann bekannte und für das erfindungsgemäße Verfahren geeignet erscheinende in Betracht. Im Gegensatz zu den Kettenpolymerisaten sind die Monomere der Polyadditionsprodukte fähig miteinander unter Bildung von Di-, Tri- oder Oligomeren zu reagieren, ohne dass es eines Initiators bedarf, der, wie bei der radikalischen Polymerisation, eine Reaktion eines Monomers beginnt, dass dann successive mit anderen Monomeren reagiert. Die zu Beginn der Polyaddition entstehenden Di-, Tri- oder Oligomeren sind zudem dazu in der Lage miteinander unter Bildung größerer Einheiten zu reagieren. Typische Polyadditionsprodukte sind Polyamide, Poylcarbonate, Poylester, Polyphenylenoxide, Polysulfone, Poylepoxide oder Polyurethane oder eine Kombination aus mindestens zwei davon, wobei Polyadditionsprodukte, die zu mindestens 50 Gew.-%, vorzugsweise mindestens 70 Gew.-% und besonders bevorzugt mindestens 90 Gew.-%, jeweils bezogen auf des Polyadditionsprodukt, aus Polyurethan bestehen, besonders bevorzugt sind.

In einer weiteren erfindungsgemäßen Ausgestaltung sind Polyadditionsprodukte, die zu mindestens 50 Gew.-%, vorzugsweise mindestens 70 Gew.-% und besonders bevorzugt mindestens 90 Gew.-%, jeweils bezogen auf des Polyadditionsprodukt, aus einem Polyalkylalkohol, dessen OH-Gruppen zumindest teilweise, vorzugsweise zum mindestens 50%, sowohl mit einer Carbonsäure, vorzugsweise mit einer C2 bis C10 Carbonsäure, verestert und in der Polymerkette zwei O-Atome tragende Sechsringe aufweisen (nachfolgend als Polyalkoholpolyadditionsprodukt genannt), besonders bevorzugt. Hier ist Polyvinylbutyral (PVB), beispielsweise kommerziell erhältlich bei Kuraray unter der Handelsbezeichnung Mowital™, als Polyaddionsprodukt besonders bevorzugt.

In einer anderen erfindungsgemäßen Ausgestaltung sind Polyadditionsprodukte, die zu mindestens 50 Gew.-%, vorzugsweise mindestens 70 Gew.-% und besonders bevorzugt mindestens 90 Gew.-%, jeweils bezogen auf des Polyadditionsprodukt, aus einem Cellulosederivat, insbesondere aus einem Celluloseester oder Nitrocellulose (NC) oder einer Mischung aus beiden bestehen, besonders bevorzugt. Als Celluloseester kommen Veresterungsprodukte der Cellulose mit einer oder mindestens zwei verschiedenen Carbonsäuren, vorzugsweise mit C2 bis C10 Carbonsäuren in Betracht. Hierunter sind die Veresterungsprodukte mit zwei und mehr Carbonsäuren bevorzugt, wobei eine der mindestens zwei Carbonsäuren ein Acetat ausbildet und die andere Carbonsäure mehr als zwei C-Atome besitzt. Hierunter besonders bevorzugt sind Cellulose-Acetat-Propionat (CAP) oder Cellulose-Acetat-Butyrat (CAB) oder eine Mischung aus diesen beiden. Diese Produkte sind beispielsweise bei Eastman unter den Handelsbezeichnungen CAP und CAB erhältlich.

Es ist weiterhin bevorzugt, dass die Kunststofffarbschicht aus zu mindest 50 Gew.-% vorzugsweise mindestens 70 Gew.-% und besonders bevorzugt mindestens 90 Gew.-%, jeweils bezogen auf die Kunststofffarbschicht aus dem Polyadditionsprodukt besteht. In der Regel beinhaltet die Kunststofffarbschicht jedoch nicht mehr als 99 Gew.-% des Polykondensationsproduktes, um noch andere Stoffe wie Farbmittel enthalten zu können.

Erfindungsgemäß gilt, dass die äußere Schicht durchaus noch weitere Schichten zwischen der äußeren Schicht und der Umgebung aufweisen kann. Im Fall der äußersten Schicht gilt erfindungsgemäß jedoch, dass diese mit der Umgebung im direkten Kontakt steht und keine weiteren Schichten, insbesondere Schutzschichten, zwischen der äußeren Schicht und der Umgebung vorgesehen sind. Jeweils die äußere Kunststofffarbschicht und die äußerste Kunststofffarbschicht bilden mit den entsprechenden flächenförmigen Verbunden, den daraus hergestellten ungefüllten und gefüllten Behältern und den Konservierungsverfahren jeweils für sich eine erfindungsgemäße Ausgestaltung.

Die erfindungsgemäßen Behälter weisen vorzugsweise zwischen 6 und 16 Kanten, vorzugsweise zwischen 7 und 12 Kanten auf. Als Kante werden erfindungsgemäß insbesondere Bereiche verstanden, die beim Falten einer Fläche, bei dem es sich um das Übereinanderlegen von zwei Teilen dieser Fläche handelt, entstehen. Als beispielhafte Kanten seien die länglichen Berührungsbereiche von jeweils zwei Wandflächen eines im Wesentlichen quaderförmigen Behälters genannt. Ein solcher quaderförmiger Behälter hat in der Regel 12 Kanten. In dem erfindungsgemäßen Behälter stellen die Behälterwände vorzugsweise die von den Kanten eingerahmten Flächen des Behälters dar. Die Behälterwände eines erfindungsgemäßen Behälters sind vorzugsweise zu mindestens 50, bevorzugt zu mindestens 70 und darüber hinaus bevorzugt zu mindestens 90% ihrer Fläche aus einer Trägerschicht ausgebildet.

Allgemein kann die Trägerschicht des erfindungsgemäßen Behälters aus jenem dem Fachmann für diesen Zweck geeigneten Materials sein, das eine ausreichende Festigkeit und Steifigkeit aufweist, um den Behälter soweit Stabilität zu geben, dass der Behälter im gefüllten Zustand seine Form im Wesentlichen beibehält. Neben einer Reihe von Kunststoffen sind auf Pflanzen basierende Faserstoffe, insbesondere Zellstoffe, vorzugsweise verleimte Zellstoffe, bevorzugt, wobei Karton besonders bevorzugt ist.

In dem erfindungsgemäßen Behälter bildet die Trägerschicht einen Teil eines flächenförmigen Verbunds, der auch als Laminat bezeichnet werden kann und oftmals in Form eines Bogens, Mantels oder einer langen Bahn bei der Herstellung des Behälters zum Einsatz kommt.

Der flächenförmige Verbund weist meist mindestens eine, oder auch 2 bis 4 weiteren thermoplastische Kunststoffschichten auf. Hier kommen sämtliche dem Fachmann geläufige Kunststoffe in Betracht, die schmelzextrudierbar sind und unter den Bedingungen des Autoklavierens nicht zu einem Delaminieren des flächenförmigen Verbunds beitragen. Hierunter sind als thermoplastische Polymere wie Polyethylen (PE), Polypropylen (PP), Polyamid (PA), Polyethylenterephtalat (PET), Ethylenlvinylalkohol (EVOH), und/oder flüssigkristalline Polymere (LCP) oder eine Mischung aus mindestens zwei davon bevorzugt. Weiterhin ist es bevorzugt, dass die weitere Kunststoffschicht(en) ein Flächengewicht in einem Bereich von 2 bis 120 g/m², vorzugsweise in einem Bereich von 5 bis 75 g/m² und besonders bevorzugt in einem Bereich von 10 bis 55 g/m² haben. Ferner ist es bevorzugt, dass die weitere Kunststoffschicht(en) eine Dicke in einem Bereich von 10 bis 100 µm, vorzugsweise ein Bereich von 15 bis 75 µm und besonders bevorzugt in einem Bereich von 20 bis 50 µm hat.

Ferner kann der flächenförmige Verbund ein oder mehrere Haftvermittlerschichten aufweisen. Diese dienen insbesondere dazu, die Trägerschicht mit einer meist vorhandenen Barriereschicht besser zu verbinden. Als Haftvermittler kommen grundsätzlich alle dem Fachmann bekannten und zum Kleben mittels chemischer Bindungen geeigneten Stoffe, insbesondere mit OH-, NH₂-, COOH- oder Anhydridgruppen funktionalisierte, vorzugsweise schmelzextrudierbare, Kunststoffe, insbesondere Maleinsäure-EthylenCopolymere, in Betracht. Derartige Haftvermittler werden unter den Handelsbezeichnungen Orevac , Admer^{®}, Lotader^{®} oder Plexar^{®} eingesetzt. Es können auch verschiedene Haftvermittler miteinander zu einem Haftvermittlerblend gemischt werden.

Weiterhin ist es im Zusammenhang mit dem erfindungsgemäßen Behälter bevorzugt, dass dieser durch einen Teilbereich der Behälterwand verschließbar ist. Dieses kann zum einen dadurch erreicht werden, in dem der entsprechende Bereich der Behälterwand durch darin vorgesehene falt- bzw. knickbare Bereiche durch Vor- und Zufalten sowie Fixieren des zugefalteten Teilbereichs der Behälterwand verschlossen werden kann. Die Fixierung zum Verschließen kann bei dem Behälter durch Siegeln oder Kleben oder einer Kombination aus diesen beiden Maßnahmen derart fest ausgestaltet werden, dass der so verschlossene Behälter nicht mehr in diesem Bereich ohne weiteres zu öffnen ist und so eine hohe Nahrungsmittellagerfähigkeit erhalten wird. Die Öffnung vor dem Gebrauch des Nahrungsmittels entlang der Perforation kann so viel einfacher erfolgen.

In einer anderen Ausgestaltung des Behälters des erfindungsgemäßen Verfahrens ist es bevorzugt, dass mindestens 70 Vol.-%, vorzugsweise mindestens 75 Vol.-% und darüber hinaus bevorzugt mindestens 80 Vol.-% des Volumens des Behälters ein Nahrungsmittel mit einem F₀-Wert von 0,01 bis 50 und vorzugsweise im Bereich von 2 bis 45 ausmacht.

Zudem ist bei einer anderen Ausgestaltung des Behälters des erfindungsgemäßen Verfahrens die Behälterwand aus einer einzigen Trägerschicht als Teil des flächenförmigen Verbunds ausgebildet. Hierbei kann der Behälter beispielsweise auch in seinen Seitenwänden aus einem eine einzige Trägerschicht aufweisenden flächigen Verbund gebildet sein, der auf seiner Unter- und Oberseite mit einem Deckel und einem Boden aus einem anderen Material ausgestaltet ist.

In einer anderen Ausgestaltung des Behälters des erfindungsgemäßen Verfahrens ist dieser ganz, vorzugsweise einstückig, aus einer einzigen Trägerschicht als Teil des flächenförmigen Verbunds ausgebildet. Dieses gilt insbesondere für quaderförmige, auch als "brick" bezeichnete Behälter sowie quaderförmige Behälter, die einen sogenannten "gable-top", meist zum Öffnen, besitzen.

Einer weiteren Ausgestaltung entsprechend, eignet sich der Behälter im verschlossenen Zustand für die Lagerung von Nahrungsmitteln. Derartige geschlossene und mit Nahrungsmitteln gefüllte erfindungsgemäße Behälter erlauben es, diese Nahrungsmittel besonders lange zu bevorraten.

Das Formen des flächenförmigen Verbunds und der Erhalt eines offenen Behälters kann durch jeden dem Fachmann hierfür geeignet erscheinende Arbeitsweise erfolgen. Insbesondere kann das Formen dadurch erfolgen, in dem, in ihrem Zuschnitt bereits die Form des Behälters berücksichtigende, blattförmige Behälterrohlinge so gefaltet werden, dass über einen Mantel ein geöffneter erfindungsgemäßer Behälter entsteht. Dieses erfolgt in der Regel dadurch, dass nach dem Falten dieses Behälterrohlings dessen Längskanten unter Ausbildung einer Seitenwand zu einem Mantel versiegelt bzw. verklebt und die eine Seite des Mantels durch Falten und weiteres Fixieren, insbesondere Versiegeln oder Kleben, geschlossen wird.

In einer anderen Ausgestaltung des erfindungsgemäßen Verfahrens wird zunächst durch Falten und Siegeln bzw. Kleben der überlappenden Stosskanten ein schlauchförmiges Gebilde mit einer fixierten Längsnaht geformt. Dieses schlauchartige Gebilde wird lateral zusammengedrückt, fixiert und getrennt und somit ebenfalls ein offener Behälter durch Faltformen und Siegeln bzw. Kleben gebildet. Hierbei kann das Nahrungsmittel bereits nach dem Fixieren und vor dem Trennen vorgesehen werden.

Die so erhaltenen offenen Behälter können auf verschiedenste Weisen mit einem Nahrungsmittel befüllt werden. In dem erfindungsgemäßen Verfahren ist es ferner bevorzugt, dass mindestens 70 Vol.-%, vorzugsweise mindestens 75 Vol.-% und darüber hinaus bevorzugt mindestens 80 Vol.-% des Volumens des Behälters ein Nahrungsmittel ausmacht.

Das Schließen des mit Nahrungsmittel gefüllten Behälters erfolgt vorzugsweise durch Falten und Siegeln bzw. Kleben der dazu im offenen Behälter vorgesehenen Teilbereiche, die vorzugsweise ebenfalls aus der Trägerschicht bzw. dem flächenförmigen Verbund bestehen. Anstelle des Siegelns mittels eines siegelfähigen Kunststoffs entspricht es einer weiteren Ausgestaltung des erfindungsgemäßen Verfahrens, dass auch andere Formen der Befestigung beispielsweise durch den Einsatz eines geeigneten Klebstoffs bzw. Haftvermittlers, der meist ein funktionalisiertes Polymer ist und somit im Gegensatz zu der physikalischen Bindung des Siegelns auch zu einer chemischen Verbindung der zu verschließenden Bereiche des erfindungsgemäßen Behälters beiträgt.

Das Bereitstellen des flächenförmigen Verbunds kann durch jede dem Fachmann für die Herstellung des erfindungsgemäßen Behälters geeignet erscheinende Maßnahme erfolgen. So können die flächenförmigen Verbunde in Form einer langen, meist von einer Rolle abgerollten Bahn, in Form eines Schlauchs oder in Form eines bereits die Form des Behälters in seinem Zuschnitt berücksichtigenden meist blattförmigen Behälterrohling oder Mantel erfolgen.

Im Zusammenhang mit dem flächerförmigen Verbund ist es bevorzugt, dass die mindestens eine Barriereschicht über eine Klebstoffschicht mit der Trägerschicht verbunden ist. Der flächenförmige Verbund kann durch jedes dem Fachmann hierzu geeignet erscheinendes Verfahren hergestellt werden. Besonders bevorzugt in diesem Zusammenhang ist es, die einzelnen Schichten über ein Koextrusionsverfahren miteinander zu dem flächenförmigen Verbund zu verarbeiten.

Für Barriereschichten kommen alle dem Fachmann bekannten Materialien mit einer geringen Gasdurchlässigkeit in Betracht. Bevorzugt sind Barriereschicht(en) aus einer Folie bzw. einer weiteren Polymerschicht wie Polyethylenvinylalkohol (EVOH). Bei der Folie kann es sich um eine Metallfolie, eine metallbedampfte Folie, eine siliziumoxidbedampfte Folie oder eine kohlenstoffbedampfte Folie handeln.

In einer weiteren Ausgestaltung des erfindungsgemäßen Verfahrens wird das Nahrungsmittel in dem geschlossenen, gefüllten Behälter auf einen F₀-Wert von 0,01 bis 50 und vorzugsweise von 2 bis 45 konserviert.

Ferner wird in einer Ausgestaltung des erfindungsgemäßen Verfahrens das Konservieren unter einem Kammerdruck von bevorzugt mindestens mehr als 1,1 bar, vorzugsweise mindestens 1,2 bar und wurde auch in einem Bereich von 1,3 bis 4 bar bei einer Temperatur in einem Bereich von vorzugsweise mehr als 102 bis 137°C und vorzugsweise in einem Bereich von 105 bis 135°C in Gegenwart von Wasserdampf durchgeführt. Die Dauer dieses Konservierens hängt von der Art, Menge, Volumen, Stückgröße fester Anteile, Viskosität und Azidität des Nahrungsmittels ab. Im Allgemeinen werden die Bedingungen durch den Fachmann so gewählt, dass die gewünschten F₀-Werte erreicht werden. Meist erfolgt das Konservieren mit einer Haltezeit über einen Bereich von 0,5 Sekunden bis 90 Minuten, vorzugsweise 2 bis 60 Minuten und besonders bevorzugt 5 bis 40 Minuten. Als besonders vorteilhaft hat es sich in den erfindungsgemäßen Verfahren bewährt, dass der Behälter während des Konservierens bewegt wird. Durch diese Bewegung, die beispielsweise ein Drehen, Stürzen und Schütteln sein kann, wird erreicht, dass das meist feste und flüssige Bestandteile aufweisende Nahrungsmittel in dem Behälter gemischt und auf diese Art und Weise eine möglichst gute und schnelle Wärmeverteilung in dem in dem Behälter enthaltenden Nahrungsmittel erreicht und ein Anhaften von verfestigtem Nahrungsmittel im Kopfraum des gefüllten geschlossenen erfindungemäßen Behälter durch lokales Überhitzen vermieden wird. Geeignete Maßnahmen und Vorrichtung zum Bewegen des Behälters während des Konservierens ergebe sich beispielsweise aus WO 2009/040347 A2.

In dem erfindungsgemäßen Verfahren ist es Bevorzugt, dass der flächenförmige Verbund erhältlich ist durch eine Schrittfolge beinhaltend:
- Bereitstellen eines Vorverbunds mit einer Oberfläche, beinhaltenden die Trägerschicht;
- Aufbringen einer flüssigen Farbschichtvorläuferlösung auf die Oberfläche; und
- Aushärten des Farbschichtvorläufers zu der Kunststoffschichtfarbschicht.

Im Zusammenhang mit dem auch flächig vorliegenden Vorverbund ist es bevorzugt, dass dieser, genauso wie der vorstehend beschriebenen flächenförmige Verbund, zusätzlich zu der Trägerschicht mindestens eine Barriereschicht, mindestens eine weitere Kunststoffschicht und mindestens eine Haftvermittlerschicht beinhaltet. Hierfür gelten die vorstehenden Ausführungen zu dem flächenförmigen Verbund ebenso. Oftmals enthält der Vorverbund alle Schichten des flächenförmigen Verbunds außer der äußersten Kunststofffarbschicht.

Weiterhin ist es in dem erfindungsgemäßen Verfahren bevorzugt, dass vor dem Aufbringen des flüssigen Farbschichtvorläufers auf die Oberfläche die Oberfläche mit einem Plasma behandelt wird. Als Plasmabehandlung kommen alle dem Fachmann zum erhöhen der Hydrophilie der Oberfläche geeigneten in Betracht. So bilden sich durch die Plasmabehandlung meist Peroxyd-, Keto-, Carboxyl- und anderen Sauerstoffverbindungen. In einer anderen erfindungsgemäßen Ausgestaltung ist die Oberfläche des Vorverbunds mindestens teilflächig, vorzugsweise ganz, aus Aluminium ausgebildet. Hierbei weist der Vorverbund häufig eine Aluminiumschicht auf, die in dem flächenförmigen Verbund häufig an die Kunststofffarbschicht angrenzend vorgesehen ist. Weiterhin ist es bei einem derartig ausgestalteten flächenförmigen Verbund bzw. Vorverbund bevorzugt, dass diese Aluminiumschicht über eine Haftvermittlerschicht oder eine Schicht aus thermoplastischem Kunststoff an die anderen Bestandteile des Vorverbunds bzw. Verbunds angebunden ist. Als Haftvermittler und thermoplastische Kunststoffe kommen die hier beschriebenen in Betracht. So kann durch das erfindungsgemäße Verfahren ein Behälter mit guter Autoklavierresistenz geschaffen werden.

Außerdem ist es in dem erfindungsgemäßen Verfahren bevorzugt, dass die Oberfläche eine Oberflächenspannung im Bereich von 36 bis 44 Dyn und besonders bevorzugt von 40 bis 41 Dyn gemäß DIN EN 14210/14370 hat. Bei einer zu niedrigen Oberflächenspannung kommt es zu leicht zu einem Ablösen der äußeren oder äußersten Kunststofffarbschicht, wohingegen sich organoleptische Nachteile bei einer zu hohen Oberflächenspannung einstellen, insbesondere, wenn die flächenförmigen Verbunde als Rollen oder Stapel länger gelagert werden.

Zudem ist es in dem erfindungsgemäßen Verfahren bevorzugt, dass der Farbschichtvorläufer eine Temperatur beim Aufgeben im Bereich von 25 bis 40°C, vorzugsweise im Bereich von 26 bis 32°C und besonders bevorzugt im Bereich von 27 bis 29°C hat. Auch dieses wirkt sich vorteilhaft auf die Autoklavierresistenz aus.

Ferner ist es in dem erfindungsgemäßen Verfahren bevorzugt, dass der flüssige Farbschichtvorläufer eine Viskosität im Bereich von 0,05 bis 0,3 Pas und vorzugsweise in einem Bereich von 0,1 bis 0,2 Pas hat. Die Viskosität wird nach DIN 53019-1 mittels eines Rotationsviskosimeters bestimmt. Das Aufbringen von Farbschichtvorläufern mit derartigen Viskositäten führt zu einer gleichmäßigen Farbstoffvorläuferschicht. Dieses wirkt sich vorteilhaft auf die Autoklavierresistenz der äußeren oder äußersten Kunststofffarbschicht aus.

Außerdem ist es in dem erfindungsgemäßen Verfahren bevorzugt, dass die Farbschichtvorläuferlösung
- FL1: einen 2- oder Mehrfachalkohol, vorzugsweise 2- und Mehrfachalkohole,
- FL2: ein 2- oder Mehrfachisocyant, vorzugsweise 2- und Mehrfachisocyanate,
- FL3: ein Farbmittel,
- FL4: 20 bis 90 Gew.-%, vorzugsweise im Bereich von 50 bis 85 Gew.-% und besonders bevorzugt im Bereich von 65 bis 80 Gew.-% bezogen auf die Farbschichtvorläuferlösung, ein Lösemittel, und
- FL5: gegebenenfalls von FL1 bis FL4 verschiedene Zusatzstoffe
beinhaltet.

Außerdem ist es in einer erfindungsgemäßen Ausgestaltung bevorzugt, dass die Farbschichtvorläuferlösung als Komponenten beinhaltet
FLa1 einen 2- oder Mehrfachalkohol, vorzugsweise 2- und Mehrfachalkohole, jeweils bezogen auf die Farbschichtvorläuferlösung, in einem Bereich von 2 bis 30 Gew.-%, vorzugsweise im Bereich von 5 bis 20 Gew.-% und besonders bevorzugt im Bereich von 10 bis 15 Gew.-%;
FLa2 ein 2- oder Mehrfachisocyant, vorzugsweise 2- und Mehrfachisocyanate, jeweils bezogen auf die Farbschichtvorläuferlösung, von weniger als 30 Gew.-%, vorzugsweise in einem Bereich von 2 bis 20 Gew.-% und besonders bevorzugt in einem Bereich von 5 bis 10 Gew.-%;
FLa3 ein Farbmittel, jeweils bezogen auf die Farbschichtvorläuferlösung, von weniger als 30 Gew.-%, vorzugsweise in einem Bereich von 2 bis 20 Gew.-% und besonders bevorzugt in einem Bereich von 5 bis 15 Gew.-%;
FLa4 von FL1 bis FL3 bzw. FL5 verschiedene Zusatzstoffe, jeweils bezogen auf die Farbschichtvorläuferlösung, von weniger als 15 Gew.-%, vorzugsweise von weniger als 10 Gew.-% und besonders bevorzugt von weniger als 5 Gew.-%; und
FLa5 mindestens ein Lösemittel mit einem Anteil gemessen an der Farbschichtvorläuferlösung der so gewählt ist, dass die Summe aller Bestandteile FLa1 bis FLa5 100 Gew.-% ergibt.

Die nachfolgenden Ausführungen für FL1 bis FL3 gelten ebenso für FLa1 bis FLa3 und FLp1 bis FLp3. Die Ausführungen zu FL4 gelten für FLa5 und FLp5 und die Ausführungen zu FL5 gelten für FLa4 und FLp4. Für FLp3 gelten die entsprechenden Ausführungen zu den für den Primer geeignete anorganische Teilchen.

Als 2- oder Mehrfachalkohole FL1 kommen alle dem Fachmann zur Polyurethanbildung bekannten und für das erfindungsgemäße Verfahren geeignet erscheinen in Betracht. Diese sind beispielsweise Zucker wie Isomalt, Sorbit oder Mannit, aliphatische Akohole wie 1,2-Ethandiol, 1,2-Propandiol, 1,2,3-Propantriol, Petaeritrith, Polyesterpolyole oder Polyetherpolyole, insbesondere Polyethylenoxid (EO) oder Polypropylenoxid (PO), oder mindestens zwei davon, wobei Polyesterpolyole oder Polyetherpolyole oder deren Kombination besonders bevorzugt und Polyetherpolyole darüber hinaus bevorzugt sind. Ebenso eignen sich die hier beschriebenen Polyadditionsprodukte für sich oder als Mischung aus mindestens zwei davon, insbesondere PVB, CAP oder CAB für sich oder in einer Mischung aus mindestens zwei der vorstehenden. Weiterhin ist es bevorzugt, dass die hier beschriebenen Polyadditionsprodukte, insbesondere Celluloseester, in Gegenwart eines Aldehydharz, insbesondere im Fall der Farbstoffschichtvorläuferlösung, eingesetzt werden. Im Fall der Primerschichtvorläuferlösung ist es bevorzugt, die hier beschriebenen Polyadditionsprodukte, insbesondere das Polyalkoholpolyadditionsprodukt, mit Polyetherpolyolen zu kombinieren.

Als 2- oder Mehrfachisocyante FL2 kommen alle dem Fachmann zur Polyurethanbildung bekannten und für das erfindungsgemäße Verfahren geeignet erscheinen in Betracht. Diese sind beispielsweise Diphenylmethandiisocyanat (MDI), polymeres Diphenylmethandiisocyanat (PMDI), Toluylendiisocyanat (TDI), Naphthylendiisocyanat (NDI), Hexamethylendiisocyanat (HDI), Isophorondiisocyanat (IPDI) oder 4,4'-Diisocyanatodicyclohexylmethan (H12MDI) oder mindestens zwei davon.

Im Zusammenhang mit den Mischungsverhältnissen von FL1 und FL2 ist es bevorzugt, dass mindestens in einer der beiden Komponenten 3- und mehrwertige Verbindungen vorliegen. Bevorzugt handelt es sich hierbei um 3- und mehrwertige Isocyanate wie MTI. Hierdurch kann der Vernetzungsgrad der Kunststofffarbschicht beeinflusst werden, wobei mit einem höheren Vernetzungsgrad meist eine verbesserte Autoklavierresistenz einher geht.

Als Farbmittel FL3 kommen dem Fachmann bekannte und für die vorliegende Erfindung geeignete sowohl feste und flüssige in Betracht. Feste Farbmittel werden oft als Farbpigmente bezeichnet und in organische und anorganische Farbpigmente unterschieden. Als geeignete Pigmente sind folgende zu nennen: i. Rot- oder Magentapigmente: Pigment Red 3, 5, 19,22,31,38,43,48:1,48:2,48:3,48:4,48:5,49:1,53:1,57:1,57:2,58:4,63:1,81,81:1,81 :2,81:3,81:4,88, 104, 108, 112, 122, 123, 144, 146, 149, 166, 168, 169, 170, 177, 178, 179, 184, 185,208,216,226,257, Pigment Violet 3, 19,23,29, 30, 37, 50 und 88; ii. Blau- oder Cyanpigmente: Pigment Blue 1,15,15:1,15:2,15:3,15:4,15:6,16,17-1,22,27,28,29,36 und 60; iii. Grünpigmente: Pigment Green 7, 26, 36 und 50; iv. Gelbpigmente: PigmentYellow 1, 3,12,13,14,17,34,35,37,55,74,81,83,93,94,95,97, 108, 109, 110,128,137,138,139,153,154,155,157,166,167,168, 177, 180, 185 und 193 und v. Weißpigmente: Pigment White 6, 18 und 21.

Als Lösemittel FL4 gelten Stoffe mit einem Schmelzpunkt von weniger als 10°C. Zu geringe Lösemittelmengen wirken sich nachteilig auf die Gleichmäßigkeit und Autoklavierresistenz der äußeren oder äußersten Kunststofffarbschicht aus. Grundsätzlich kommen alle dem Fachmann bekannte und für das erfindungsgemäße Verfahren geeigneten Lösemittel in Betracht. Bevorzugt sind polare Lösemittel. Hierunter eigenen sich aprotischen und protische Lösemittel. Hierunter sind aprotisch polare Lösemittel bevorzugt, unter denen Ester und Ketone, beispielsweise Aceton, besonders bevorzugt sind. Als Ester kommen vor allem Ethylacetat, N-Propylacetat oder Methoxypropylacetat in Betracht.

Als von FL1 bis FL4 verschiedene Zusatzstoffe FL5 kommen alle dem Fachmann bekannte und für das erfindungsgemäße Verfahren geeigneten in Betracht. Vorzugsweise werden Wachse, Seifen oder Tenside und, zur Erhöhung der Lagerfähigkeit des Farbschichtvorläufers, Stabilisatoren eingesetzt. Häufig haben die Zusatzstoffe einen oberhalb von 30°C und bevorzugt oberhalb von 50°C liegenden Schmelzpunkt. Durch die Hilfsmittel können die Viskosität und die Oberflächenspannung der des flüssigen Farbschichtvorläufers eingestellt werden.

Besonders bevorzugte sind in dem erfindungsgemäßen Verfahren mindestens zwei miteinander reaktionsfähige Komponenten, die ein Polyadditiv, vorzugsweise ein Polyurethan bilden, geeignet. Kommerziell sind beispielsweise die Produkte Gecko^{®} der Huber Gruppe, Deutschland, und XP Flint der Flint Gruppe, Luxenbourg, zu nennen.

Das Aufbringen der flüssigen Farbstoffschichtvorläuferlösung kann durch jedes dem Fachmann geeignete Druckverfahren erfolgen. Als Druckverfahren seien insbesondere Flachdruck, Digitaldruck, Hochdruck und Tiefdruck, vorzugsweise Tiefdruck genannt. In dem erfindungsgemäßen Verfahren ist es bevorzugt, dass die flüssige Farbschichtvorläuferlösung, mittels einer Napffläche mit einer Vielzahl von die flüssige Farbschichtvorläuferlösung aufnehmenden Vertiefungen, die vorzugsweise napfartig ausgebildet sind, auf die Oberfläche aufgebracht wird. Die eine Vielzahl von Vertiefungen beinhaltenden Napffläche befindet sich vorzugsweise auf einer Walze, die die flüssige Farbschichtvorläuferlösung aus einem Vorratsbehälter schöpft. Es ist ferner bevorzugt, dass eine möglichst gleichmäßige Füllung der Vertiefungen mittels eines Homogenisierers, vorzugsweise in Form einer Rakel, sichergestellt wird. Die so verbesserte Gleichmäßigkeit der Kunststofffarbschicht wirkt sich positiv auf die Autoklavierresistenz aus. Zudem ist es in dem erfindungsgemäßen Verfahren bevorzugt, dass die Oberfläche des Vorverbunds mittels eines Pressmittels, vorzugsweise einer Presswalze, an die Napffläche angedrückt wird.

Die äußere oder äußerste vernetzte Kunststofffarbschicht ist häufig die äußerste Schicht eines 2 bis 8, bevorzugt 3 bis 6 Kunststofffarbschichten unterschiedlicher Farbe aufweisenden Farbsystems. Durch mehrere Kunststofffarbschichten verschiedener Farben, meist der Grundfarben, können diverse Mischfarben auf der Oberfläche des flächenförmigen Vorverbunds erzeugt werden. Sofern das Farbsystem zwei oder mehr Kunststofffarbschichten aufweist, können die neben der äußeren oder äußersten vernetzten Kunststofffarbschicht vorliegenden eine oder weiteren Kunststofffarbschichten, abgesehen von der Farbe, den gleichen Aufbau und die gleichen Eigenschaften wie die äußere oder äußerste vernetzte Kunststofffarbschicht aufweisen. Zudem kann das Auftragen der flüssigen Farbschichtvorläuferlösung je nach Zahl der Kunststofffarbschichten wiederholt werden.

Außerdem ist es in dem erfindungsgemäßen Verfahren bevorzugt, dass die Oberfläche eine vernetzte, gegebenenfalls mit anorganischen Partikeln gefüllte, Primerkunststoffschicht ist. Vorzugsweise enthält die Primerkunststoffschicht weniger Farbmittel als die Kunststofffarbschicht und kann auch frei von Farbmitteln sein. Falls die Primerkunststoffschicht solche beinhaltet, haben die anorganischen Teilchen vorzugsweise eine Teilchengröße im Bereich von 3 bis 12 µm und besonders bevorzugt eine Teilchengröße im Bereich von 3 bis 7 µm. Als anorganische Partikel kommen alle dem Fachmann geeignet erscheinenden Metalloxide und -Sulfate in Betracht. Als Metalloxide seien SiO-Verbindungen, wie Aerosil oder Ton, TiO₂ oder AlO-Verbindungen, wie Al₂O₃, genannt. Als Metallsulfate kommen insbesondere BaSO₄ und CaSO₄ in Frage. Neben der weißen Farbe der anorganischen Partikel ist es bevorzugt, dass diese mit Sauerstoffgruppen, vorzugsweise OH-Gruppen, hydrophiliert sind. Sowohl die gefüllte Primerkunststoffschicht als auch die Plasmabehandlung, die sowohl alternativ als auch beide in dem Vorverbund vorgesehen sein können, dienen dazu, die mechanische Beständigkeit der darauf vorgesehenen Kunststofffarbschicht während des Autoklavierens zu erhöhen. Neben der Hydrophilierung dient die Zugabe von anorganischen, meist weißen Partikeln in die Primerkunststoffschicht dazu, die Farbechtheit der äußeren oder äußersten Kunststofffarbschicht zu sichern und insbesondere deren Vergilbung zu vermeiden.

Die äußere oder äußerste Farbstoffkunststoffschicht wird durch eine Polyaddition oder auch einer Polykondensation als Untergruppe der Polyaddition erzeugt. Hierbei ist es bevorzugt, dass ein Bestrahlen erfolgt. Hierzu ist bevorzugt, dass die mit der flüssigen Farbschichtvorläuferschichtlösung versehene Oberfläche unter der oder den Bestrahlungsquellen hindurchbewegt wird und diese vorzugsweise eingehaust sind, wobei die Bestrahlungsquellen vorzugsweise einen Teil der Einhausung bilden, um so zu der Autoklavierresistenz der Kunststofffarbschicht weiter beizutragen.

Zur Bestrahlung wird jede dem Fachmann für die Aushärtung bekannte und geeignete Strahlungsquelle in dem erfindungsgemäßen Verfahren eingesetzt. Bevorzugt sind Infrarot-Strahlungsquellen oder Heißluftgebläse.

Weiterhin ist es in dem erfindungsgemäßen Verfahren bevorzugt, dass auf die Bestrahlung eine Wärmebehandlung bei einer Temperatur im Bereich von 80 bis 160°C, vorzugsweise in einem Bereich von 100 bis 140°C und besonders bevorzugt in einem Bereich von 110 bis 130°C erfolgt.

Zudem ist es in dem erfindungsgemäßen Verfahren bevorzugt, dass die Kunststofffarbschicht ein Flächengewicht im Bereich von 0,4 bis 15 g/m² und besonders bevorzugt im Bereich von 0.5 bis 1,5 g/m² hat. Hierzu ist es ebenso vorteilhaft, den Farbschichtvorläufer im Bereich von 0,4 bis 15 g/m² und besonders bevorzugt im Bereich von 0.5 bis 1,5 g/m² aufzubringen.

Außerdem ist es in dem erfindungsgemäßen Verfahren bevorzugt, dass die Kunststofffarbschicht eine Dicke im Bereich von 0,4 bis 15 µm und bevorzugt im Bereich von 0,5 bis 1.5 µm hat. Hierzu ist es ebenso vorteilhaft, den Farbschichtvorläufer im Bereich von 0,4 bis 15 µm und besonders bevorzugt im Bereich von 0.5 bis 1,5 µm aufzubringen. Der Durchmesser wird anhand von Schnitten bestimmt.

Diese vorstehenden Maßnahmen des erfindungsgemäßen Verfahrens tragen jeweils für sich oder auch in einer Kombination von mindestens zwei dieser Maßnamen dazu bei, die Resistenz der darauf vorgesehenen Kunststofffarbschicht während des Autoklavierens zu erhöhen. Eine zu harte Kunststofffarbschicht führt häufig zu einem Abplatzen von Kunststofffarbschichtbereichen, da diese unter den Autoklavierbedingungen zu spröde werden oder von vorneherein nicht ausreichend haften. Die Haftung kann nach DIN EN ISO 2409 bestimmt werden. Eine zu weiche Kunststofffärbschicht führt hingegen häufig zu einem Verkratzen von Kunststofffarbschichtbereichen, da diese unter den Autoklavierbedingungen, insbesondere durch die mechanische Belastung wie Reiben oder Scheuern durch die Halterungen für die Behälter und besonders bei einem Autoklavieren, bei dem der Behälter bewegt wird, beansprucht wird. Die Scheuerbeständigkeit kann nach ASTM D5264-98 bestimmt werden.

Einen weiteren Beitrag zur Lösung mindestens einer der vorstehend genannten Aufgaben leistete ein flächenförmiger Verbund, beinhaltend
V1. mindestens eine äußere vernetzte, ein Farbmittel beinhaltende Kunststofffarbschicht;
V2. eine Trägerschicht; und
V3. eine thermoplastische Kunststoffschicht;
wobei zwischen der Kunststofffarbschicht und der Trägerschicht eine vernetzte, vorzugsweise anorganische Teilchen beinhaltenden, Primerkunststoffschicht vorgesehen ist.

Eine weitere Ausgestaltung der vorliegenden Erfindung betrifft einen Behälter, der mindestens teilweise aus einem erfindungsgemäßem flächenförmigen Verbund gebildet ist. Vorzugsweise beinhaltet der erfindungsgemäße Behälter ein Nahrungsmittel.

Für den flächenförmigen Verbund als Erzeugnis als auch für dessen Bestandteile und auch für den daraus geformten Behälter gelten die vorstehenden im Zusammenhang mit dem erfindungsgemäßen Verfahren erfolgten Ausführungen ebenso. Gleichfalls gelten für das erfindungsgemäße Verfahren auch die Ausführungen zu dem Erzeugnis und zu dem Behälter ergänzend.

Es weiterhin bevorzugt, dass die die Primerkunststoffschicht, nachdem diese beispielsweise durch Aushärten gebildet wurde, eine Schichtdicke in einem Bereich von 0,5 bis 5 µm, vorzugsweise in einem Bereich von 1,25 bis 2 µm und besonders bevorzugt in einem Bereich von 1,6 bis 1,7 µm besitzt. Wie auch im Fall der anderen Schichten des flächenförmigen Verbunds, läßt sich die Schichtdicke der Primerkunststoffschicht anhand eines Schnittes durch den flächenförmigen Verbund bestimmen.

Die Primerkunststoffschicht kann auf jede dem Fachmann geeignet erscheinende Art erhalten werden. Vorzugsweise ist diese erhältlich durch Aufbringen eines Primerschichtvorläufers auf die Oberfläche eines entsprechenden Vorläufers des flächenförmigen Verbunds, auf dem die auf die Primerkunststoffschicht folgende Kunststofffarbschicht vorgesehen werden soll. Daher ist es in dem erfindungsgemäßen Verfahren bevorzugt, dass die flüssige Primerschichtvorläuferlösung als Komponenten beinhaltet
FLp1 einen 2- oder Mehrfachalkohol, vorzugsweise 2- und Mehrfachalkohole, jeweils bezogen auf die Primerschichtvorläuferlösung, in einem Bereich von 5 bis 40 Gew.-%, vorzugsweise im Bereich von 10 bis 30 Gew.-% und besonders bevorzugt im Bereich von 15 bis 25 Gew.-%;
FLp2 ein 2- oder Mehrfachisocyant, vorzugsweise 2- und Mehrfachisocyanate, jeweils bezogen auf die Primerschichtvorläuferlösung, von weniger als 30 Gew.-%, vorzugsweise in einem Bereich von 2 bis 20 Gew.-% und besonders bevorzugt in einem Bereich von 5 bis 10 Gew.-%;
FLp3 anorganische Teilchen, jeweils bezogen auf die Primerschichtvorläuferlösung, von weniger als 40 Gew.-%, vorzugsweise in einem Bereich von 5 bis 30 Gew.-% und besonders bevorzugt in einem Bereich von 10 bis 20 Gew.-%;
FLp4 von FL1 bis FL3 bzw. FL5 verschiedene Zusatzstoffe, jeweils bezogen auf die Primerschichtvorläuferlösung, von weniger als 15 Gew.-%, vorzugsweise von weniger als 10 Gew.-% und besonders bevorzugt von weniger als 5 Gew.-%; und
FLp5 ein Lösemittel mit einem Anteil an der Primerschichtvorläuferlösung der so gewählt ist, dass die Summe aller Bestandteile FL1 bis FL5 100 Gew.-% ergibt.

Es ist erfindungsgemäß für den flächenförmiger Verbund bevorzugt, dass die Kunststofffarbschicht eine Oberfläche mit einen Randwinkel von größer 50°, bevorzugt zwischen 50 bis 85°, besonders bevorzugt, 65 bis 80° und darüberhinaus bevorzugt 70 bis 75° hat. Der Randwinkel wird nach der hier beschriebenen Methode bestimmt. Allgemein wird somit ein flächenförmiger Verbund bereitgestellt, der eine Kunststofffarbschicht beinhaltet, wobei die Kunststofffarbschicht eine Oberfläche mit einen Randwinkel von größer 50°, vorzugsweise in einem Bereich von 60 bis 80° und besonders bevorzugt in einem Bereich von 70 bis 75° hat. Derartige flächenförmige Verbunde eignen sich besonders für Behälter zum Autoklavieren von darin enthaltenen Nahrungsmitteln, wobei die Farbigkeit und der Informationsgehalt auf den Behältern, wenn überhaupt, nur unwesentlich leiden. Daher werden Behälter aus flächenförmigen Verbunden, insbesondere wenn diese einstückig aus diesen Verbunden durch Faltformen gebildet wurden, in Verfahren, in denen Nahrungsmittel in diesen Behältern autoklaviert werden, wobei beim Autoklavieren die vorstehend genannten Bedingungen besonders bevorzugt sind, eingesetzt.

Vorzugsweise weist nicht nur der Primerschichtvorläufer sonder auch die vernetzte Primerkunststoffschicht mehr, vorzugsweise mindestens 10 Gew.-% und besonders bevorzugt mindestens 50 Gew.-%, anorganische Teilchen als die Kunststofffarbschicht auf. Folglich ist eine Primerkunststoffschicht mit anorganischen Teilchen, vorzugsweise Weißpigment, in einem Bereich von 20 bis 55 Gew.-%, vorzugsweise in einem Bereich von 30 bis 50 Gew.-% und besonders bevorzugt in einem Bereich von 35 bis 45 Gew.-% sowie ferner bevorzugt in einem Bereich von 38 bis 42 Gew.-%, jeweils bezogen auf die Primerkunststoffschicht, erfindungsgemäß besonders bevorzugt. So wird eine besonders gute Beständigkeit der Kunststofffarbschicht bei hervorragendem Farbeindruck erhalten.

Weiterhin wird dem Primerschichtvorläufer 1 bis 25 Gew.-%, bevorzugt 2 bis 15 Gew.-% und besonders bevorzugt 5 bis 10 Gew.-%, jeweils bezogen auf den Primerschichtvorläufer, ein 2- oder Mehrfachisocyanat hinzugefügt. Dieses erfolgt vorzugsweise vor dem Aufbringen des Primerschichtvorläufers auf die Oberfläche des entsprechenden Vorläufers des flächenförmigen Verbunds. Vorzugsweise sollte zwischen dem Hinzufügen und dem Aufbringen nicht mehr als 2 Tage, vorzugsweise nicht mehr als 1 Tag und besonders bevorzugt nicht mehr als 12 Stunden liegen.

Die nachfolgenden exemplarischen Figuren zeigen:
- Figur 1: eine perspektivische Ansicht eines durch das erfindungsgemäße Verfahren erhältlichen Behälters;
- Figur 2: eine schematische Darstellung des Ablaufs des erfindungsgemäßen Verfahrens;
- Figur 3: eine schematische Darstellung einer Vorrichtung zum Aufbringen der Kunststofffarbschicht;
- Figur 4: eine perspektivische Ansicht eines durch das erfindungsgemäße Verfahren erhältlichen offnen Behälters;
- Figur 5: einen schematischen Querschnitt durch einen flächenförmigen Verbund mit einer äußersten Kunststofffarbschicht;
- Figur 6: einen schematischen Querschnitt durch einen flächenförmigen Verbund mit einer äußersten Kunststofffarbschicht;
- Figur 7: Schematische Darstellung zu Randwinkelbestimmung.

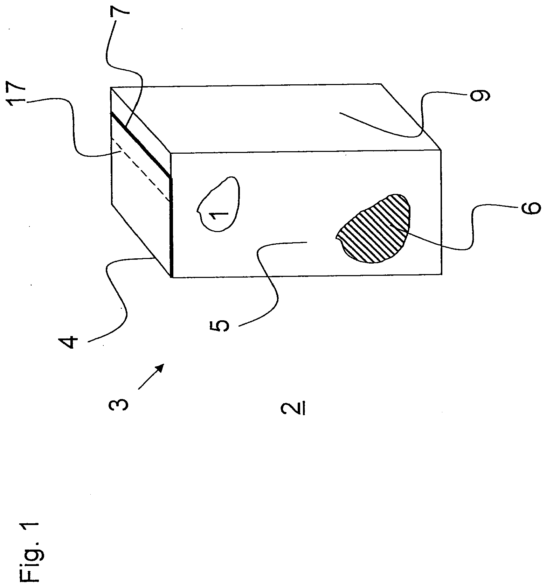

Figur 1 zeigt die perspektivische Aussicht eines durch das erfindungsgemäße Verfahren erhältlichen Behälter 3 der im Wesentlichen quaderförmig ausgestaltet ist und eine Vielzahl von Kanten 4 aufweist, die die Behälterwände 5 gegeneinander abgrenzen und so einen Innenraum 1 schaffen, der von der Umgebung 2 durch den Behälter 3 abgegrenzt ist. Die Behälterwände 5 weisen eine schematisch als Ausschnitt gezeigte, den ganzen flächenförmigen Verbund 7 einstückig durchlaufende Trägerschicht 6, die aus Karton ausgestaltet ist, und eine äußerste vernetzte Kunststofffarbschicht 9 auf. Auf der Oberseite des Behälters 3 ist entlang einer Linie eine Perforation 17 zum einfachen Öffnen des Behälters 3 vorgesehen.

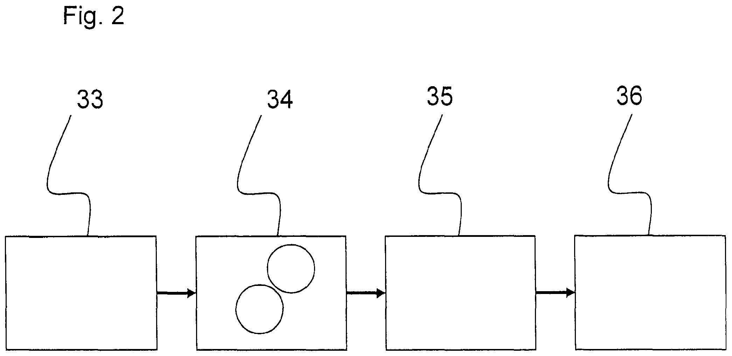

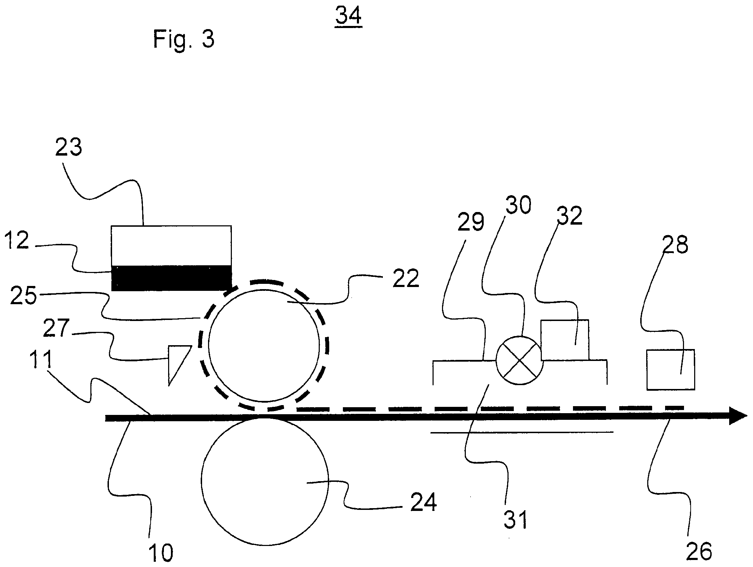

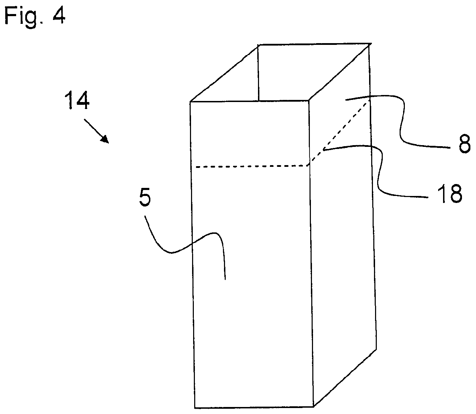

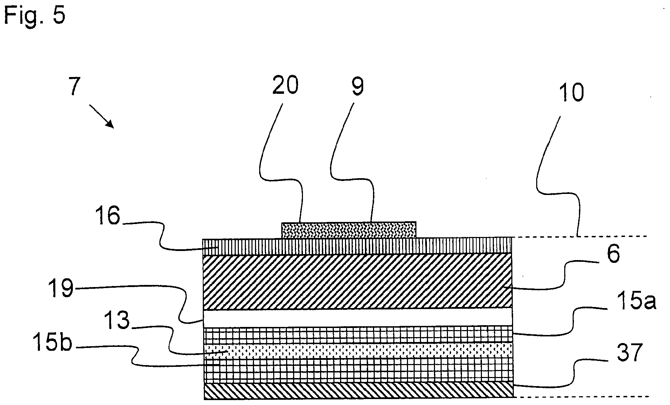

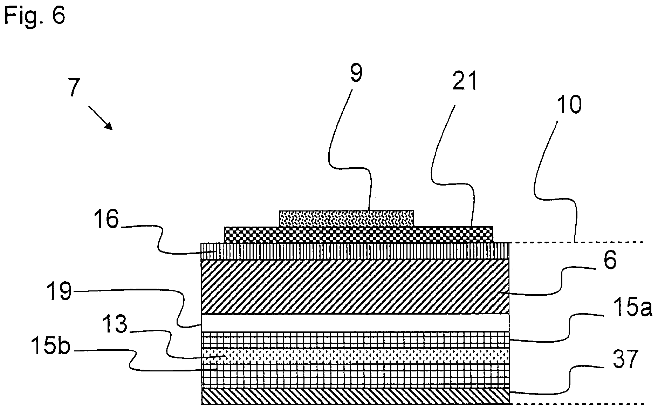

In Fig. 2 ist zunächst eine Vorverbundherstellung 33 vorgesehen. Hierbei handelt es sich um eine Vorrichtung, in der meist durch Schmelz-Coextrusion ein beispielsweise in den Fig. 5 und 6 näher beschriebener Vorverbund 10 hergestellt wird. An diesen schließt sich eine Druckeinheit 34 an, die in Fig. 3 näher beschrieben ist und in der auf den Vorverbund 10 die Kunststofffarbschicht 9 aufgebracht wird, um ein Druckbild oder Dekor 26 zu ergeben. Hierauf folgt ein Befüllungsbereich 35, in der der in der Druckeinheit 34 fertig gestellte Packstoffrohling beispielsweise in einen in Fig. 4 dargestellten offenen Behälter 14 durch Falten und Siegeln oder Verkleben umgewandelt wird, um mit dem Nahrungsmittel befüllt und anschließend durch Falten, Siegeln bzw. Verkleben verschlossen zu werden. An den Befüllungsbereich 35 schließt sich ein Autoklavierbereich 36 an. Hier wird der geschlossene, mit Nahrungsmittel gefüllte Behälter 3 unter Druck und in einer feuchten Atmosphäre autoklaviert, wobei dieses vorzugsweise in einer Druckkammer, die besonders bevorzugt zum Bewegen des Behälters, insbesondere zum rotieren, ausgebildet ist, erfolgt. Häufig sind die Vorverbundherstellung 33 und Druckeinheit 34 von dem Befüllungsbereich 35 und dem Autoklavierbereich 36 räumlich getrennt. So ist es bevorzugt, dass der Befiillungsbereich 35 und der Autoklavierbereich 36 bei einem Nahrungsmittel verarbeitenden Unternehmen vorgesehen ist.

In Fig. 3 wird eine zum Tiefdruck geeignete Druckeinheit 34 im schematischen Querschnitt gezeigt, wobei ein Vorverbund 10 mit einer Oberfläche 11 zwischen einer Napfwalze 22 und einer Anpresswalze 24 durchläuft, wobei die Oberfäche 11 der Napfwalze 22 zugewandt ist. Die Napfwalze 22 weist eine eine Vielzahl von Vertiefungen beinhaltende Napfoberfläche 25 auf, die aus einem Farbschichtvorläuferlösungsreservoir 23 in die Vielzahl von Vertiefungen der Napfoberfläche 25 eine Farbschichtvorläuferlösung 12 aufnehmen, die über eine Rakel 27 geglättet werden. Die sich in den Vertiefungen der Napfoberfläche 25 befindliche Farbschichtvorläuferlösung 12 wird auf die Oberfläche 11 des Vorverbunds 10 abgegeben und durchläuft zunächst im flüssigen, Lösemittel beinhaltenden Zustand eine Einhausung 29 mit einer Strahlungsquelle 30, die über ein Warmluftgebläse 32 eine Warmgasatmosphäre 31 in der Einhausung 29 bildet. Hierdurch wird die zunächst flüssige Farbstoffvorläuferlösung 12 durch mindestens teilweises Entziehen von Lösemittel und durch eine wärmeinitiierte chemische Reaktion, meist eine Polyaddition, zu einer Kunststofffarbschicht 9 durch Vernetzung ausgehärtet, die ein Dekor 26 bildet. Das dabei freiwerdende Lösemittel wird über einen Lösemittelabzug 29 entzogen.

Figur 4 zeigt die perspektivische schematische Ansicht eines offenen Behälters 14, wobei die Behälterwand 5 einen verschließbaren Teilbereich 8 aufweist, der über eine Faltkante 18 abgegrenzt ist.

Eine bevorzugte Ausgestaltung eines für den Behälter des erfindungsgemäßen Verfahrens eingesetzten flächigen Verbunds 7 zeigt Figur 5. In dem geschlossenen Behälter 3 von außen nach innen folgen in dem flächigen Verbund dieser bevorzugten Ausgestaltung eine dem Druckmuster oder Dekor 26 entsprechend oft nur teilweise vorgesehene Kunststofffarbschicht 9 mit vorzugsweise aus feinteiligen Pigmenten bestehenden Farbmitteln 20, eine weiter Kunststoffschicht 16, eine Trägerschicht 6, eine Zusatzschicht 19, eine erste Haftvermittlerschicht 15a, eine Aluminiumschicht als Barriereschicht 13, eine zweite Haftvermittlerschicht 15b und weitere thermoplastische Kunststoffschicht 37. Der Vorverbund 10, auf den die Kunststofffarbschicht 9 sich befindet, hat den zwischen den gestrichelten Linien gezeigten Aufbau.

In Figur 6 wird eine weitere Ausgestaltung eines flächenförmigen Verbunds für einen Behälter des erfindungsgemäßen Verfahrens gezeigt. Zusätzlich zu den in Figur 5 gezeigten Schichten weist dieser zwischen der thermoplastischen Kunststoffschicht 16 und der Kunststofffarbschicht eine Primerkunststoffschicht 21 auf.

Als Haftvermittler kommen insbesondere thermoplastische Polymere, vorzugsweise Polyolefine, insbesondere Polyethylene, und Polypropylene oder eine Mischung daraus, in Betracht, die funktionalisiert sind, um mit den jeweiligen an sie angrenzenden Schichten über eine chemische Reaktion eine möglichst feste Verbindung einzugehen. Bevorzugte Haftvermittler sind Polyethylen oder Polypropylen, die jeweils mit einem eine Funktionalität tragenden Monomer, insbesondere Maleinsäureanhydrid copolymerisiert sind. Derartige Haftvermittler werden unter den Handelsbezeichnungen Orevac^{®}, Admer^{®}, Lotader^{®} oder Plexar^{®} eingesetzt. Es können auch verschiedene Haftvermittler miteinander zu einem Haftvermittlerblend gemischt werden.

Die weitere Kunststoffschicht oder -Schichten und die Zusatzschicht oder - Schichten bestehen vorzugsweise aus thermoplastischen Polymeren. Hier kommen grundsätzlich alle dem Fachmann für die Herstellung eines flächenförmigen Verbunds, insbesondere wenn dieser zu einem Behälter geformt wird, der einer Hitze- und Feuchtigkeitsbehandlung, mit oder ohne Nahrungsmittel gefüllt, ausgesetzt wird, in Betracht. Als thermoplastische Polymere eignen sich durch Kettenpolymerisation erhaltene Polymere, insbesondere Polyolefine, wobei polycylische Olefincopolymere (POC), Polyethylen und Polypropylen hierunter bevorzugt sind. Als thermoplastische Polymere eignen sich ebenso Produkte von Polykondensationsreaktionen oder Polyringöffnungsreaktionen, worunter Polyamide, Polyester und Polyurethane besonders bevorzugt sind. Als Polyurethane kommen bevorzugt thermoplastische Polyurethane in Betracht, vorzugsweise mit einem gewichtsmittel des Molekulargewichts in einem Bereich von 2.000 bis 2.000.000 g/mol und besonders bevorzugt 4.000 bis 50.000 g/mol. Die Polyurethane weisen vorzugsweise eine Dichte in einem Bereiche von 1,01 bis 1,40 und besonders bevorzugt in einem Bereich von 1,08 bis 1,25 g/cm³ auf. Derartige Polyurethane sind unter dem Handelsnahmen Elastogran^{®} kommerziell erhältlich. Als Polyester sind vornehmlich Polybutylenterephthalat, Polycarbonat, Polyethylenterephthalat, Polyethylennaphthalat und bevorzugt Polyethylenterephthalat geeignet. Polyester weisen gewichtsmittel des Molekulargewichts in einem Bereich von 5.000 bis 2.000.000 g/mol und bevorzugt in einem Bereich von 8.000 bis 100.000 g/mol und Dichten in einem Bereich von 1,25 bis 1,70 und bevorzugt in einem Bereich von 1,30 bis 1,45 g/cm³ auf. Ein typischer kommerziell erhältlicher Polyester ist CLEARTUF^{®} P60. Zudem sind Mischungen der durch Kettenpolymerisation erhaltenen Polymere und der durch Polykondensationsreaktionen oder Polyringöffnungsreaktionen erhaltenen Polymere erfindungsgemäß geeignete Polymere. Durch Kettenpolymerisation erhaltene Polymere sind jedoch bevorzugt. In einer weiteren Abwandlung der vorliegenden Erfindung liegen die Haftvermittler mit den thermoplastischen Polymeren als Mischung vor.

Unter den Polyethylenen sind HDPE, LDPE, LLDPE, und PE sowie Mischungen aus mindestens zwei davon bevorzugt. Unter den Polypropylenen sind isotaktische, syndiotaktische und ataktische sowie Mischungen aus mindestens zwei davon bevorzugt. Unter den Polyestern sind acrylatbasierte bevorzugt. Allgemein werden die thermoplastischen Polymere für die verschiedenen Schichten eines flächenförmige Verbunds zur Herstellung eines erfindungsgemäßen Behälters so ausgewählt, dass diese eine Schmelztemperatur besitzen, die oberhalb der Temperaturbelastung liegt, denen der Behälter in dem erfindungsgemäßen Verfahren ausgesetzt wird.

### Messmethoden:

Grundsätzlich werden, sofern hier nicht anders angegeben, alle Messungen bei 22°C, Atmosphärendruck und einer Raumluftfeuchtigkeit in einem Bereich von 50 bis 70% durchgeführt. Sollte eine Messmethode hier nicht angegeben sein, so gilt stets die vor dem 10. Oktober 2009 letztgültige ISO-Norm für die Bestimmung der jeweiligen Größe.

### Randwinkelbestimmung:

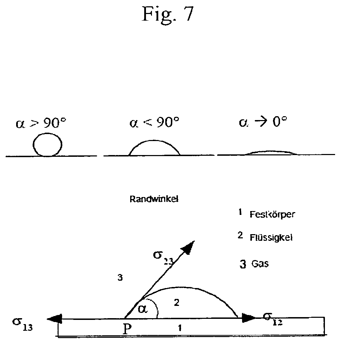

Die Bestimmung erfolgt gemäß TAPPI T558 om-06 mit folgender Maßgabe: Ein Tropfen Wasser (4 µl Volumen) wird auf die zu bestimmende Oberfläche (hier Kunststofffarbschicht) gegeben. Nach einer Einschwingzeit von ca. 500 ms wird die auf dem Probenteller liegende Probe mit dem darauf liegenden Tropfen von einem Kamerasystem mit dessen optischen Achse den Querschnitt der Probe schneidend digital erfasst (siehe Figur 7). Die Ebene wird händisch markiert, die Auswertung (Anlegen der Winkel) übernimmt die Software des für die Messung eingesetzten Geräts OCA 20 der Firma Dataphysics, die den Randwinkel α der jeweiligen Probe ermittelt.

### BEZUGSZEICHENLISTE

- 1: Innenraum
- 2: Umgebung / Behälteraußenseite
- 3: Behälter
- 4: Kante
- 5: Behälterwand
- 6: Trägerschicht
- 7: Verbund
- 8: Verschließbarer Teilbereich
- 9: Kunststofffarbschicht
- 10: Vorverbund
- 11: Oberfläche
- 12: Farbschichtvorläuferlösung
- 13: Barriereschicht
- 14: Offener Behälter
- 15: Haftvermittler a, b
- 16: thermoplastische Kunststoffschicht
- 17: Perforation
- 18: Faltkante
- 19: Zusatzschicht
- 20: Farbmittel
- 21: Primerkunststoffschicht
- 22: Napfwalze
- 23: Farbschichtvorläuferlösungreservoir
- 24: Anpresswalze
- 25: Napfoberfläche
- 26: Dekor
- 27: Rakel
- 28: Lösemittelabzug
- 29: Einhausung
- 30: Strahlungsquelle
- 31: Warmgasatmosphäre
- 32: Warmluftgebläse
- 33: Vorverbundherstellung
- 34: Druckeinheit
- 35: Befüllungsbereich
- 36: Autoklavierbereich
- 37: Weitere thermoplastische Kunststoffschicht

## Patentansprüche

1. Ein Verfahren zur Herstellung eines einen Innenraum (1) gegenüber einer Umgebung (2) abschließenden, geschlossenen, mit Nahrungsmittel gefüllten Behälters (3) aus mindestens einem mindestens eine Kante (4) aufweisenden flächenförmigen Verbund (7), beinhaltend die Schritte:
a) Bereitstellen des flächenförmigen Verbunds (7), beinhaltend
a1. mindestens eine äußere vernetzte, ein Farbmittel (20) beinhaltende Kunststofffarbschicht (9), wobei die Kunststofffarbschicht (9) ein Polyadditionsprodukt beinhaltet;
a2. eine Trägerschicht (6); und
a3. eine thermoplastische Kunststoffschicht (16);
b) Formen des flächenförmigen Verbunds (7) unter Erhalt eines offenen Behälters (14), wobei die Kunststofffarbschicht (9) zur Umgebung (2) und die Kunststoffschicht (16) zum Innenraum (1) weisen;
c) Befüllen des offenen Behälters (14) mit einem Nahrungsmittel;
d) Schließen des offenen Behälters (14) unter Erhalt des geschlossenen, gefüllten Behälters (3);
e) Konservieren des Nahrungsmittel in dem geschlossenen, gefüllten Behälter (3) in einer Druckkammer unter einem Kammerdruck von mehr als 1 bar bei einer Temperatur in einem Bereich von mehr als 100 bis 140°C in Gegenwart von Wasserdampf.

2. Verfahren nach Anspruch 1, wobei die äußere Kunststofffarbschicht eine äußerste Kunststofffarbschicht ist.

3. Verfahren nach Anspruch 1 oder 2, wobei der Verbund (7) erhältlich ist durch eine Schrittfolge beinhaltend:
- Bereitstellen eines Vorverbunds (10) mit einer Oberfläche (11), beinhaltenden die Trägerschicht (6);
- Aufbringen einer flüssigen Farbschichtvorläuferlösung (12) auf die Oberfläche (11); und
- Aushärten des Farbschichtvorläufers (12) zu der Kunststoffschichtfarbschicht (9).

4. Verfahren nach Anspruch 3, wobei die Farbschichtvorläuferlösung (12)
FL1 einen 2- oder Mehrfachalkohol,
FL2 ein 2- oder Mehrfachisocyanat,
FL3 ein Farbmittel,
FL4 20 bis 90 Gew.-%, bezogen auf die Farbschichtvorläuferlösung, ein Lösemittel, und
FL5 gegebenenfalls von FL1 bis FL4 verschiedene Zusatzstoffe
beinhaltet.

5. Verfahren nach Anspruch 3 oder 4, wobei das Aushärten durch Bestrahlen erfolgt.

6. Verfahren nach Anspruch 5, wobei die Bestrahlung durch eine Wärmebehandlung bei einer Temperatur im Bereich von 80 bis 160°C folgt.

7. Verfahren nach einem der Ansprüche 3 bis 6, wobei vor dem Aufbringen der flüssigen Farbschichtvorläuferlösung (12) auf die Oberfläche (11) die Oberfläche (11) mit einem Plasma behandelt wird.

8. Verfahren nach Anspruch 3 oder 7, wobei die Oberfläche (11) eine Oberflächenspannung im Bereich von 38 bis 44 Dyn gemäß DIN EN 14210/14370 hat.

9. Verfahren nach einem der Ansprüche 3 bis 8, wobei der flüssige Farbschichtvorläufer (12) eine Viskosität im Bereich von 0,05 bis 0,3 Pas hat.

10. Verfahren nach einem der Ansprüche 3 bis 9, wobei der flüssige Farbschichtvorläufer (12) mittels einer eine Vielzahl von Vertiefungen beinhaltenden Napffläche (25) auf die Oberfläche (11) aufgebracht wird.

11. Verfahren nach einem der Ansprüche 3 bis 10, wobei die Oberfläche (11) eine vernetzte Primerkunststoffschicht ist (21) ist.

12. Verfahren nach einem der vorhergehenden Ansprüche, wobei die Kunststofffarbschicht (9) ein Flächengewicht im Bereich von 0,4 bis 15 g/cm² hat.

13. Verfahren nach einem der vorhergehenden Ansprüche, wobei die Kunststofffarbschicht (9) eine Dicke im Bereich von 0,5 bis 2 µm hat.

14. Verfahren nach einem der vorhergehenden Ansprüche, wobei mindestens 70 Vol.-% des Innenraums (1) des Behälters (3) ein Nahrungsmittel ausmacht.

15. Verfahren nach einem der vorhergehenden Ansprüche, wobei der Behälter aus einer einzigen Trägerschicht (6) als Teil des flächenförmigen Verbundes (7) ausgebildet ist.

16. Verfahren nach einem der vorhergehenden Ansprüche, wobei der Behälter ganz aus der Trägerschicht (6) als Teil des flächenförmigen Verbundes (7) ausgebildet ist.

17. Verfahren nach einem der vorhergehenden Ansprüche, wobei der geschlossene, gefüllte Behälter (3) während des Konservierens bewegt wird.

18. Ein flächenförmiger Verbund (7), beinhaltend
V1 .mindestens eine äußere vernetzte, ein Farbmittel (20) beinhaltende Kunststofffarbschicht (9);
V2.eine Trägerschicht (6); und
V3. eine thermoplastische Kunststoffschicht (37);
wobei zwischen der Kunststofffarbschicht (9) und der Trägerschicht (6) eine vernetzte Primerkunststoffschicht (21) vorgesehen ist.

19. Flächenförmiger Verbund (7) nach Anspruch 18, wobei die Kunststofffarbschicht (9) eine Oberfläche mit einen Randwinkel von größer 50° hat.

20. Ein Behälter (3) mindestens teilweise ausgebildet aus einen flächenförmigen Verbund (7) nach Anspruch 18 oder 19.

21. Behälter (3) nach Anspruch 20, wobei der Behälter ein Nahrungsmittel beinhaltet.

## Claims

1. Method for the production of a closed container (3) which closes off an interior (1) from an environment (2) and is filled with foodstuff, from at least one sheet-form composite (7) having at least one edge (4), which method comprises the steps:
a) providing the sheet-form composite (7), comprising
a1. at least one outer crosslinked plastics coloured layer (9) comprising a colouring agent (20), wherein the plastics coloured layer (9) comprises a polyaddition product;
a2. a carrier layer (6); and
a3. a thermoplastic plastics layer (16);
b) shaping the sheet-form composite (7) to obtain an open container (14), wherein the plastics coloured layer (9) faces the environment (2) and the plastics layer (16) faces the interior (1);
c) filling the open container (14) with a foodstuff;
d) closing the open container (14) to obtain the closed, filled container (3);
e) preserving the foodstuff in the closed, filled container (3) in a pressure chamber under a chamber pressure of more than 1 bar at a temperature in a range of from more than 100 to 140°C in the presence of steam.

2. Method according to Claim 1, wherein the outer plastics coloured layer is an outermost plastics coloured layer.

3. Method according to Claim 1 or 2, wherein the composite (7) is obtainable by a series of steps comprising:
- providing a pre-composite (10) having a surface (11), comprising the carrier layer (6) ;
- applying a liquid coloured layer precursor solution (12) to the surface (11); and
- curing the coloured layer precursor (12) to form the plastics coloured layer (9).

4. Method according to Claim 3, wherein the coloured layer precursor solution (12) comprises
FL1 a di- or poly-hydric alcohol,
FL2 a di- or poly-isocyanate,
FL3 a colouring agent,
FL4 from 20 to 90% by weight, based on the coloured layer precursor solution, of a solvent, and
FL5 optionally additives other than FL1 to FL4.

5. Method according to Claim 3 or 4, wherein curing is carried out by irradiation.

6. Method according to Claim 5, wherein irradiation takes place by heat treatment at a temperature in the range of from 80 to 160°C.

7. Method according to one of Claims 3 to 6, wherein, before the liquid coloured layer precursor solution (12) is applied to the surface (11), the surface (11) is treated with a plasma.

8. Method according to Claim 3 or 7, wherein the surface (11) has a surface tension in the range of from 38 to 44 dyn according to DIN EN 14210/14370.

9. Method according to one of Claims 3 to 8, wherein the liquid coloured layer precursor (12) has a viscosity in the range of from 0.05 to 0.3 Pas.

10. Method according to one of Claims 3 to 9, wherein the liquid coloured layer precursor (12) is applied to the surface (11) by means of a dimpled surface (25) comprising a plurality of depressions.

11. Method according to one of Claims 3 to 10, wherein the surface (11) is a crosslinked primer plastics layer (21).

12. Method according to one of the preceding claims, wherein the plastics coloured layer (9) has a weight per unit area in the range of from 0.4 to 15 g/_{cm}²_{.}

13. Method according to one of the preceding claims, wherein the plastics coloured layer (9) has a thickness in the range of from 0.5 to 2 µm.

14. Method according to one of the preceding claims, wherein at least 70% by volume of the interior (1) of the container (3) is occupied by a foodstuff.

15. Method according to one of the preceding claims, wherein the container is formed of a single carrier layer (6) as part of the sheet-form composite (7).

16. Method according to one of the preceding claims, wherein the container is formed wholly of the carrier layer (6) as part of the sheet-form composite (7).

17. Method according to one of the preceding claims, wherein the closed, filled container (3) is moved during the preservation step.

18. Sheet-form composite (7) comprising
V1. at least one outer crosslinked plastics coloured layer (9) comprising a colouring agent (20) ;
V2. a carrier layer (6); and
V3. a thermoplastic plastics layer (37);
wherein a crosslinked primer plastics layer (21) is provided between the plastics coloured layer (9) and the carrier layer (6).

19. Sheet-form composite (7) according to Claim 18, wherein the plastics coloured layer (9) has a surface with a contact angle of greater than 50°.

20. Container (3) formed at least in part of a sheet-form composite (7) according to Claim 18 or 19.

21. Container (3) according to Claim 20, wherein the container contains a foodstuff.

## Revendications

1. Procédé pour la fabrication d'un récipient (3) fermé, isolant vis-à-vis d'un environnement (2), à base d'au moins un composite (7) de forme plate comportant au moins une arête (4), rempli d'un produit alimentaire, comportant les étampes :
a) disposition du composite (7) de forme plate, comportant
a1. au moins une couche colorée à base de matière plastique (9) réticulée externe, comportant un agent colorant (20), la couche colorée à base de matière plastique (9) comportant un produit de polyaddition ;
a2. une couche de support (6) ; et
a3. une couche de matière synthétique thermoplastique (16) ;
b) mise en forme du composite de forme plate (7) avec obtention d'un récipient (14) ouvert, la couche colorée à base de matière plastique (9) étant tournée vers l'environnement (2) et la couche de matière synthétique (16) étant tournée vers l'intérieur (1) ;
c) remplissage du récipient ouvert (14) avec un produit alimentaire ;
d) fermeture du récipient ouvert (14) avec obtention du récipient (3) rempli, fermé ;
e) mise en conserve du produit alimentaire dans le récipient (3) rempli, fermé, dans une chambre sous pression, sous une pression dans la chambre de plus de 1 bar à une température dans une plage de plus de 100 à 140 °C en présence de vapeur d'eau.

2. Procédé selon la revendication 1, dans lequel la couche colorée à base de matière plastique externe est une couche colorée à base de matière plastique la plus externe.

3. Procédé selon la revendication 1 ou 2, dans lequel le composite (7) peut être obtenu par une suite d'étapes comprenant :
- disposition d'un pré-composite (10) présentant une surface (11), comportant la couche de support (6) ;
- application d'une solution liquide (12) de précurseur de couche colorée (12) sur la surface (11) ; ; et
- durcissement du précurseur de couche colorée (12) pour l'obtention de la couche colorée en couche à base de matière plastique (9).

4. Procédé selon la revendication 3, dans lequel la solution de précurseur de couche colorée (12) comporte
FL1 un diol ou polyol,
FL2 un di- ou polyisocyanate,
FL3 un agent colorant,
FL4 20 à 90 % en poids, par rapport à la solution de précurseur de couche colorée, d'un solvant, et
FL5 éventuellement des additifs différents de FL1 à FL4.

5. Procédé selon la revendication 3 ou 4, dans lequel le durcissement s'effectue par irradiation.

6. Procédé selon la revendication 5, dans lequel l'irradiation est suivie d'un traitement thermique à une température dans la plage de 80 à 160 °C.

7. Procédé selon l'une quelconque des revendications 3 à 6, dans lequel, avant l'application de la solution liquide (12) de précurseur de couche colorée sur la surface (11), on traite la surface (11) par un plasma.

8. Procédé selon la revendication 3 ou 7, dans lequel la surface (11) a une tension superficielle dans la plage de 38 à 44 dynes selon DIN EN 14210/14370.

9. Procédé selon l'une quelconque des revendications 3 à 8, dans lequel le précurseur liquide (12) de couche colorée a une viscosité dans la plage de 0,05 à 0,3 Pa.s.

10. Procédé selon l'une quelconque des revendications 3 à 9, dans lequel le précurseur liquide (12) de couche colorée est appliqué sur la surface (11) au moyen d'une surface de godet (25) comportant une multiplicité de cavités.

11. Procédé selon l'une quelconque des revendications 3 à 10, dans lequel la surface (11) est une couche de matière plastique réticulée d'apprêt (21) .

12. Procédé selon l'une quelconque des revendications précédentes, dans lequel la couche colorée à base de matière plastique (9) a un poids par unité de surface dans la plage de 0,4 à 15 g/cm .

13. Procédé selon l'une quelconque des revendications précédentes, dans lequel la couche colorée à base de matière plastique (9) a une épaisseur dans la plage de 0,5 à 2 µm.

14. Procédé selon l'une quelconque des revendications précédentes, dans lequel un produit alimentaire occupe au moins 70 % en volume de l'intérieur (1) du récipient (3).

15. Procédé selon l'une quelconque des revendications précédentes, dans lequel le récipient est constitué d'une seule couche de support (6) en tant que partie du composite (7) de forme plate.

16. Procédé selon l'une quelconque des revendications précédentes, dans lequel le récipient est constitué en totalité de la couche de support (6) en tant que partie du composite (7) de forme plate.

17. Procédé selon l'une quelconque des revendications précédentes, dans lequel le récipient (3) rempli, fermé, est mis en mouvement pendant la mise en conserve.

18. Composite (7) de forme plate, comportant
V1. au moins une couche colorée à base de matière plastique (9) réticulée externe, comportant un agent colorant (20) ;
V2. une couche de support (6) ; et
V3. une couche de matière synthétique thermoplastique (37) ;
une couche de matière plastique réticulée d'apprêt (21) étant prévue entre la couche colorée à base de matière plastique (9) et la couche de support (6).

19. Composite de forme plate (7) selon la revendication 18, dans lequel la couche colorée à base de matière plastique (9) a une surface présentant un angle de contact de plus de 50°.

20. Récipient (3) constitué au moins en partie d'un composite de forme plate (7) selon la revendication 18 ou 19.

21. Récipient (3) selon la revendication 20, le récipient comportant un produit alimentaire.
